# EUROPEAN PATENT SPECIFICATION

(11) **EP 4 575 040 B1**
(45) Date of publication and mention of the grant of the patent: **16.09.2026**
(21) Application number: 23383374.8
(22) Date of filing: 22.12.2023
(51) Int. Cl.: C25B 1/04, C25B 11/031, C25B 11/053, C25B 11/057, C25B 11/065, C25B 11/091

(54) **NI-BASED POROUS ELECTRODE FOR WATER ELECTROLYSIS AND THE PREPARATION METHOD THEREOF**
NI-BASIERTE PORÖSE ELEKTRODE FÜR DIE WASSERELEKTROLYSE UND HERSTELLUNGSVERFAHREN DAFÜR
ÉLECTRODE POREUSE À BASE DE NI POUR ÉLECTROLYSE DE L'EAU ET SON PROCÉDÉ DE PRÉPARATION

(43) Date of publication of application: 25.06.2025
(73) Proprietor: Fundación Cidetec, 20014 Donostia-San Sebastián (ES); Universitat Autònoma de Barcelona, 08193 Bellaterra (Cerdanyola del Vallès) (ES); Institució Catalana de Recerca I Estudis Avançats, 8010 Barcelona (ES)
(72) Inventor: NICOLENCO, Aliona, 20014 Donostia-San Sebastián (ES); SALICIO PAZ, Asier, 20014 Donostia-San Sebastián (ES); LEKKA, Maria, 20014 Donostia-San Sebastián (ES); GARCÍA LECINA, Eva, 20014 Donostia-San Sebastián (ES); ALCAIDE MONTERRUBIO, Francisco, 20014 Donostia-San Sebastián (ES); PELLICER VILÀ, Eva Maria, 08193 Bellaterra (ES); SORT VIÑAS, Jordi, 08193 Bellaterra (ES); EILER, Konrad, 08193 Bellaterra (ES); DE PAZ CASTANY, Roger, 08193 Bellaterra (ES)
(74) Representative: ZBM Patents - Zea, Barlocci & Markvardsen

(56) References cited:
- PUTRI LUTFI K ET AL: "Engineering nickel phosphides for electrocatalytic hydrogen evolution: A doping perspective", CHEMICAL ENGENEERING JOURNAL, ELSEVIER, AMSTERDAM, NL, vol. 461, 13 February 2023 (2023-02-13), XP087287296, ISSN: 1385-8947, [retrieved on 20230213], DOI: 10.1016/J.CEJ.2023.141845
- ZÁCHENSKÁ JANA ET AL: "Nickel-based nanocoatings on 3D Ni foam for zero-gap alkaline water electrolysis", JOURNAL OF APPLIED ELECTROCHEMISTRY, SPRINGER, DORDRECHT, NL, vol. 50, no. 9, 24 June 2020 (2020-06-24), pages 959 - 971, XP037222998, ISSN: 0021-891X, [retrieved on 20200624], DOI: 10.1007/S10800-020-01448-7
- HUO SIYUE ET AL: "Synthesis of functional Ni2P/CC catalyst and the robust performances in hydrogen evolution reaction and nitrate reduction", INTERNATIONAL JOURNAL OF HYDROGEN ENERGY, ELSEVIER, AMSTERDAM, NL, vol. 45, no. 7, 23 December 2019 (2019-12-23), pages 4015 - 4025, XP086010595, ISSN: 0360-3199, [retrieved on 20191223], DOI: 10.1016/J.IJHYDENE.2019.11.210
- LI TENG ET AL: "Scale-Up Preparation of Flexible Ni-W-P@Fiber Cloth Electrode for Boosting Overall Water Electrosplitting", vol. 11, no. 39, 2 October 2023 (2023-10-02), US, pages 14549 - 14558, XP093187556, ISSN: 2168-0485, Retrieved from the Internet <URL:https://pubs.acs.org/doi/pdf/10.1021/acssuschemeng.3c03931> [retrieved on 20240719], DOI: 10.1021/acssuschemeng.3c03931

## Description

### Technical Field

This patent application pertains to the field of water electrolyzers, specifically to electrodes for water electrolysis, and more particularly to the preparation and use of non-noble catalysts for electrodes in water electrolyzers.

### Background Art

Water electrolysis technologies are crucial for addressing significant modern challenges, especially in the areas of sustainable energy and environmental protection. During electrolysis, the water molecules are efficiently split into hydrogen and oxygen using electricity. Hydrogen, being a clean and adaptable energy source, holds great promise for reducing greenhouse gas emissions and moving towards a greener future. Hydrogen produced through water electrolysis can be used for various applications, including fuel cells, reducing our reliance on fossil fuels. The economic and environmental sustainability of water electrolysis significantly depends on the development of efficient and cost-effective electrocatalysts, particularly at the cathode side.

Traditionally, platinum-group metals (PGMs) have been used as the catalysts of choice in water electrolysers due to their exceptional catalytic activity for the hydrogen evolution reaction (HER). However, their limited global availability, escalating costs, and environmental implications raised the demands for sustainable and non-noble catalyst alternatives. This resulted in a new leap of research and innovation, governed by the search for earth-abundant materials that could be integrated in advanced catalyst designs. The research challenge lies in ensuring that the novel materials not only respect the sustainability concerns but also ensure the same (or reasonable) level of catalytic performance of PGMs and stability over cycles of operation.

One common strategy in the development of non-noble catalysts is increasing the surface-to-volume ratio of the catalyst.

In this line, electrodeposition onto metallic 3D-substrates, such as foams, has gained attention due to the possibility to prepare catalysts with tuned composition and high surface-to-volume ratio. There is a wide variety of commercially available metallic foams that can be directly used for electrodeposition. However, such foams typically have thicknesses exceeding 1 mm and pore sizes from 450 µm up to several mm, resulting in a relatively high volume, which is a handicap for the successful integration of such materials in real devices. Besides, the relatively high thickness of available metallic foams results in an increase of weight to the electrode material that is undesirable for the final application. J.D. Gojgić *et al.* (cf. Gojgić, J.D. *et al.* "Hydrogen evolution at Ni foam electrodes and Ni-Sn coated Ni foam electrodes", *Applied Catalysis A: General,* 2023, Vol. 663, 119312) discloses the fabrication of Ni-Sn coated Ni foam electrodes and the activity of the given material towards hydrogen evolution in alkaline medium. Likewise, Y. Wu *et al.* (Wu, Y. et al. "Potentiostatic electrodeposited of Ni-Fe-Sn on Ni foam served as an excellent electrocatalyst for hydrogen evolution reaction", International Journal of Hydrogen Energy, 2021, Vol. 46, Issue 53, pp. 26930-26939) reported similar results for Ni-Fe-Sn. In both studies it is disclosed that, to significantly increase the HER activity of Ni foams, there is the possibility to deposit different alloys on the Ni foams, such as by electrodeposition methods. In both cases, the substrate that was used is a foam produced by electroless metal deposition onto a polyurethane foam as a template. Subsequently, the polymer foam template is removed, leaving behind a metallic 3D-structured body that serves as a substrate for electrodeposition of a catalytically active layer. To allow for successful removal of the template, the metallic 3D structured body must have sufficient thickness to maintain its structure after the removal of the template. Both authors state that the deposited Ni alloy layer is inherently porous due to the rough/coarse coating. This porosity of the Ni alloy layer itself is therefore highly irregular and in no way controlled. It is important to point out that both works are limited to HER in alkaline media, which is the common field of application for Ni-based electrodes. Putri Lutfi K et al. (Putri Lutfi K et al., "Engineering nickel phosphides for electrocatalytic hydrogen evolution: A doping perspective", Chemical Engineering Journal, 2023, vol. 461) discloses Ni based phosphide materials for electrocatalytic hydrogen evolution, including porous and nanostructured catalyst systems whose activity is enhanced by compositional tuning and doping; however, it does not clearly and unambiguously disclose a multilayer electrode architecture comprising structurally distinct layers with defined thicknesses and controlled nanopore size ranges. Záchenská Jana et al., (Záchenská Jana et al., "Nickel-based nanocoatings on 3D Ni foam for zero-gap alkaline water electrolysis", Journal of Applied Electrochemistry, 2020, vol. 50) discloses a three-dimensional porous nickel foam substrate provided with Ni based nanocoatings for alkaline water electrolysis, wherein the coatings are deposited to enhance catalytic performance; nevertheless, the disclosed structures correspond to single-layer coatings and do not comprise a multilayer architecture with a distinct first metallic layer and a separate nanoporous second layer having defined structural parameters. Huo Siyue et al (Huo Siyue et al., "Synthesis of functional Ni2P/CC catalyst and the robust performances in hydrogen evolution reaction and nitrate reduction", International Journal of Hydrogen Energy, 2019, vol. 45) discloses a process for preparing a Ni₂P catalyst on a carbon cloth substrate by deposition of a Ni P precursor layer followed by conversion, thereby providing an active coating for hydrogen evolution; however, the resulting electrode is not described as comprising a multilayer structure with clearly defined, compositionally distinct layers, nor does it disclose a nanoporous layer having specified pore size ranges and thicknesses. Li Teng et al. (Li Teng et al., "Scale-Up Preparation of Flexible Ni-W-P@Fiber Cloth Electrode for Boosting Overall Water Electrosplitting", ACS Sustainable Chemistry & Engineering, 2023, vol. 11) discloses a flexible electrode comprising a fiber cloth substrate coated with a Ni W P alloy layer obtained by electroless plating, forming a continuous and conductive coating with micrometre-scale thickness; however, this coating is described as a single alloy layer uniformly deposited on the substrate, and no disclosure is provided of a multilayer architecture or of a dedicated nanoporous layer with controlled pore size and thickness ranges.

Although several electrocatalysts have been disclosed in the literature, there is still a need for cost-effective Ni-based electrodes free from Pt-group metals (PGM) and rare-earths and having the required catalytic performance for hydrogen evolution reactions (HER), particularly in water electrolyzers.

### Summary of Invention

The inventors have developed a hierarchically porous free-standing electrode based on nickel and free from PGMs and rare-earths having an improved performance towards HER compared with other PGM or rare-earths free catalyst of the prior art. Advantageously, the electrode of the present disclosure can be targeted to substitute conventional PGMs-based cathodes used in both Proton Exchange Membrane Water Electrolyzers (PEM WE) and Alkaline Water Electrolyzers (AWE), thus considerably reducing the manufacturing costs without significantly compromising the efficiency and, as a consequence, providing a sustainable hydrogen production. Particularly, the significantly low thickness of the metallic layers forming the electrode (which is possible by maintaining the carbon cloth or of a polymeric foam used as template for the formation of the mentioned layers on the final electrode) allows respecting the thickness limitations of the existing WE cell stacks and do not require the development of special protocols for their integration. The new electrodes provide a solution to the mass/volume issue in water electrolyser stacks by being exceptionally thin. This allowed to adapt them to existing setups without extensive modifications and offer a significantly larger surface area while maintaining conventional lateral dimensions. This design minimizes the mass/volume issue, making electrolyser stacks more compact and space-efficient.

As can be seen from the examples, a competitive level of efficiency towards HER can be achieved by introducing a hierarchical porosity into Ni-based materials, while avoiding the use of PGMs or rare earths. Particularly, the developed materials demonstrate high catalytic activity towards HER in both acidic and alkaline media, as well as excellent stability over 7 days under working conditions, without significant loss in performance.

Thus, a first aspect of the present disclosure relates to Ni-based porous electrode for water electrolysis, the electrode comprising:
(a) a macroporous substrate having a thickness from 100 to 1500 µm, a porosity equal to or higher than 45% and, optionally, a pore size from 50 µm to 450 µm;
(b) a first layer of a metal or of a metal alloy covering the macroporous substrate, wherein the first layer has a thickness from 100 nm to 20 µm and the metal or the metal alloy is selected from the group consisting of Ni, Co, Cu, Ag, Sn, Au, and an alloy of the metal with B or P; and
(c) a second layer of Ni, a Ni-X alloy or a Ni-X-Y alloy covering the first layer (b), wherein the second layer has a thickness from 300 nm to 2 µm and a pore size from 2 nm to 100 nm; and wherein the Ni-X alloy is a binary alloy comprising at least 50 wt.% Ni, and X is a metal selected from W, Mo, Mn, Co, Cu, and Fe; and the Ni-X-Y is a ternary alloy comprising at least 50 wt.% Ni, and X and Y are selected from W, Mo, Mn, Co, Cu, Fe, P, B, S, and Se, provided that X and Y are different;
wherein the Ni-based porous electrode is free from Pt-group metals and rare-earths.

Advantageously, the total thickness of the Ni-based porous electrode of the present disclosure is just over 1500 µm, thickness that cannot be achieved by the methods of the prior art, being the thinnest commercial foams of about 1.6 mm. A favourable mass-to-volume ratio directly impacts the portability, cost-effectiveness, and employment of hydrogen production systems.

A second aspect of the present disclosure relates to process for the manufacturing of a Ni-based porous electrode as defined in claim 1, wherein the Ni-based porous electrode is free from Pt-group metals and rare-earths, the process comprising the following steps:
(i) provision of a macroporous substrate having a thickness from 100 to 1500 µm, a porosity equal to or higher than 45% and, optionally, a pore size from 50 µm to 450 µm;
(ii) deposition by electroless plating of a metal or metal alloy on a macroporous substrate in order to form a first layer of the metal or metal alloy having a thickness from 100 nm to 20 µm, wherein the metal or the metal alloy is selected from the group consisting of Ni, Co, Cu, Ag, Sn, Au, and an alloy of the metal with B or P; and
(iii) micelle-assisted electrodeposition of Ni, a Ni-X alloy or a Ni-X-Y alloy on the first layer of metal or metal alloy in order to obtain a second layer of a Ni, Ni-X alloy, or Ni-X-Y alloy covering the first layer; wherein the Ni, Ni-X alloy, or Ni-X-Y alloy layer has a thickness from 300 nm to 2 µm and a pore size from 2 nm to 100 nm; wherein the Ni-X alloy is a binary alloy comprising at least 50 wt.% Ni, and X is a metal selected from W, Mo, Mn, Co, Cu, and Fe; and the Ni-X-Y is a ternary alloy comprising at least 50 wt.% Ni, and X and Y are selected from W, Mo, Mn, Co, Cu, Fe, P, B, S, and Se, provided that X and Y are different;
wherein step (iii) is carried out without previously removing the macroporous substrate.

Advantageously, keeping the macroporous substrate used as template allows both significantly reducing the thickness of the first and the second layers and providing a better metal coverage of the surface (i.e., a more uniform growth both of the first and the second layers, that is, both layers have uniform thickness and composition). Consequently, the overall cost of the whole process is reduced, while avoiding any undesired change in the crystallographic structure of the first metal or metal alloy layer due to the heat treatment, which could be detrimental to the growing of the second Ni-X alloy layer.

Another aspect of the present disclosure relates to the use of the Ni-based porous electrode as defined herein to catalyze the HER both in acidic and alkaline aqueous solution, particularly in acidic aqueous solution.

Still another aspect of the present disclosure relates to a water electrolyzer comprising the Ni-based porous electrode as defined herein.

### Brief Description of Drawings

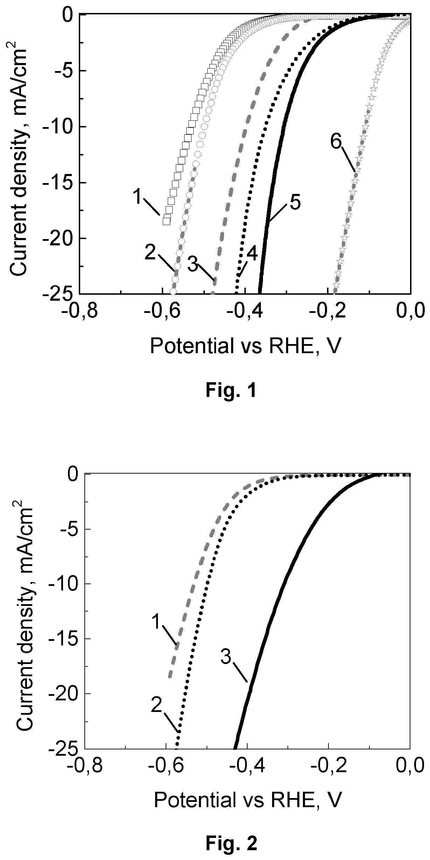

Fig. 1 shows iR-corrected linear sweep voltammetry (LSV) curves in 0.5 M H₂SO₄ showing hydrogen evolution for dense Ni-Cu films, mesoporous Ni-Cu, and hierarchically porous Ni-Cu films on flat and foam substrates. The iR correction was performed using the solution resistance determined by electrochemical impedance spectroscopy (EIS). The displayed current density refers to the current per geometric area. 1: Ni-Cu flat, dense (Comparative examples 2); 2: Ni-Cu mesoporous, only Phase 2 (Comparative examples 3); 3: NiP, macroporous, only Phase 1 (Comparative examples 1); 4: Ni-Cu layer, dense on macroporous metallized polyurethane foam (Comparative Example 4); 5: Ni-Cu hierarchically porous, Phase 1 + Phase 2 (Example 1); 6: Pt/C (Reference Example).
Fig. 2 shows iR-corrected linear sweep voltammetry (LSV) curves in Ni-Cu in alkaline medium. 1: Comparative examples 2 (Ni-Cu dense on flat); 2: Comparative examples 3 (Ni-Cu mesoporous on flat); 3: Hierarchically porous Ni-Cu.

### Detailed description of the invention

All terms as used herein in this application, unless otherwise stated, shall be understood in their ordinary meaning as known in the art. Other more specific terms as used in the present application are as set forth below and are intended to apply uniformly throughout the specification and claims unless an otherwise expressly set out definition provides a broader definition.

The term "porosity" (or void fraction), as used herein, refers to a measure of the empty space (i.e., voids or pores) in a material, and is determined as a fraction between 0 and 1 or as a percentage between 0% and 100% of the volume of voids in a material based on the total volume of the material.

The term "pore", as used herein, refer to any small opening or interstice.

The terms "pore size", as used herein, refers to the average diameter of the cross-sectional dimension of the pores.

The porosity can be measured by several methods known in the art, such as by optical methods, e.g., determining the area of the material versus the area of the pores or of the voids visible under the microscope (the "areal" and "volumetric" porosities are equal for porous media with random structure, as is the case of the porous electrode of the present disclosure). As an instance, both porosity and pore size can be measured by field-emission scanning electron microscopy (FESEM) (Carl Zeiss Ultra Plus) based on microscopy image analysis taken either from the top surface or from cross-section of material.

The term 'macroporosity', as used herein, refers either to pores in the case of foams with a diameter larger than 50 µm or to voids created among the fibers of the cloth, that is, distances between the fibers of the cloth from 1 µm to 50 µm.

The term 'mesoporosity', as used herein, refers to pores with diameters between 2 and 100 nm, particularly between 2 and 50 nm. In the present disclosure, mesoporosity of the second layer is created upon removal of a micelle forming surfactant used in the electrodeposition of the second layer by the micelle-assisted electrodeposition as defined below.

The term "platinum group metals (PGM)" are Pt, Pd, Rh, Ru, Os and Ir.

The term "rare earths" also known as rare-earth elements (REE) or rare-earth metals are Sc, Y, La, Ce, Pr, Nd, Pm, Sm, Eu, Gd, Tb, Dy, Ho, Er, Tm, Yb, and Lu.

As used herein, the term "electrode" (also referred herein as "electrocatalyst") refers to a free-standing Ni-based electrode catalyst, where the catalytically active layer is grown onto the substrate, the substrate being previously prepared (electroless metallized) by coating it with a metallic layer that will allow the growing of a Ni-based metallic layer acting as catalyst (since it is directly exposed to the media), while enhancing the uniformity and adherence of the catalytically active layer.

It is noted that, as used in this specification and the appended claims, the singular forms "a", "an", and "the" include plural referents unless the context clearly dictates otherwise.

As mentioned above, a first aspect relates to a Ni-based electrode for water electrolysis comprising (a) a macroporous substrate having a specific thickness, porosity level, and a pore size; (b) a first layer of a metal or a metal alloy as defined above covering the macroporous substrate; and (c) a second layer of Ni, a Ni-X alloy or a Ni-X-Y alloy as defined above covering the first layer (b), wherein the Ni-based porous electrode is free from Pt-group metals and rare-earths.

Therefore, the Ni-based electrode of the present disclosure has a hierarchical porosity defined by a 3D-structured bilayer, wherein the first metallic layer is supported on a macroporous substrate acting as a template, thus the first metallic layer has a macroporous structure, and the second Ni-based metallic layer, acting as catalyst, has a mesoporous structure.

Particularly, the first metallic coating (b) is present on the entire surface of the macroporous substrate (a) and the Ni, Ni-X alloy or Ni-X-Y alloy coating (c) is present on the entire surface of the metallic coating (b). Advantageously, this allows improving conductivity, as all the surface of the macroporous substrate is coated.

The macroporosity provided by the macroporous substrate can ensure a final thickness equal to or lower than about 1500 µm and a porosity level equal to or higher than 45%, with characteristic pore size equal to or higher than 50 µm. The upper limit of the pore size is restricted by the total thickness of the macroporous substrate. Some examples of the appropriate macroporous substrates are: polymeric foams (e.g., polyurethane foam, polystyrene foam, polypropylene foam, or polyethylene foam) or carbon cloths with a required porosity level.

In another embodiment, optionally in combination with one or more features of the embodiments defined above, the thickness of the macroporous support is from 100 µm to 1000 µm. In another embodiment, the thickness of the macroporous support is from 100 µm to 650 µm. In another embodiment, the thickness of the macroporous support is from 250 µm to 650 µm. In another embodiment, the thickness of the macroporous support is from 450 µm to 650 µm.

In another embodiment, optionally in combination with one or more features of the embodiments defined above, the porosity of the macroporous substrate is equal to of higher than 50%, particularly from 50% to 99 %, more particularly, from 50% to 98%.

In an embodiment, the macroporous substrate is a carbon cloth or a polymer foam, particularly, a polymer foam. Examples of polymer foams are, without being limited to, polyurethane foam, polystyrene foam, polypropylene foam, and polyethylene foam.

In a particular embodiment, optionally in combination with one or more features of the embodiments defined above, the macroporous substrate is a carbon cloth having a porosity from 50% to 60%. In another particular embodiment, optionally in combination with one or more features of the embodiments defined above, the macroporous substrate is a polymeric foam having a porosity from 70% to 98%.

In a particular embodiment, optionally in combination with one or more features of the embodiments defined above, the macroporous substrate is a carbon cloth having a thickness from 100 µm to 700 µm. In another particular embodiment, optionally in combination with one or more features of the embodiments defined above, the macroporous substrate is a polymeric foam having a thickness from 500 µm to 1500 µm, particularly from 500 µm to 1000 µm, more particularly from 500 µm to 800 µm.

In another particular embodiment, optionally in combination with one or more features of the embodiments defined above, the macroporous substrate is a polymeric foam having a pore size from 50 µm to 450 µm, particularly from 100 µm to 300 µm, more particularly, from 200 µm to 300 µm.

In a particular embodiment, the macroporous substrate is a polyurethane foam.

In another embodiment, optionally in combination with one or more features of the embodiments defined above, the thickness of the first layer of a metal or a metal alloy covering the macroporous substrate is from is 100 nm to 10 µm, particularly from 500 nm to 5 µm, more particularly, from 1 µm to 2 µm.

In another embodiment, optionally in combination with one or more features of the embodiments defined above, the metal or the metal alloy of the first layer is selected from the group consisting of Co, Cu, and a Ni-P alloy, particularly a Ni-P alloy.

In another embodiment, optionally in combination with one or more features of the embodiments defined above, the second layer, i.e., the Ni, Ni-X alloy or Ni-X-Y alloy coating covering the first layer of metal or metal alloy, has a thickness from 300 nm to 1 µm. In a particular embodiment, the second layer has a thickness from 300 nm to 800 nm. In a particular embodiment, the second layer has a thickness from 400 nm to 500 nm.

In another embodiment, optionally in combination with one or more features of the embodiments defined above, the Ni, Ni-X alloy or Ni-X-Y alloy coating covering the metallic coating has a pore size from 5 nm to lower than 100 nm, particularly, from 10 nm to 50 nm.

In an embodiment, optionally in combination with one or more features of the embodiments defined above, the second layer is a Ni-X alloy or a Ni-X-Y alloy, wherein X and Y are as defined above.

In an embodiment, optionally in combination with one or more features of the embodiments defined above, the second layer is a Ni-X alloy, wherein X is as defined above. In a particular embodiment, X is a metal selected from W, Co, Cu, and Fe. In another embodiment, optionally in combination with one or more features of the embodiments defined above, in the Ni-X alloy, X is selected from W, Co, and Cu.

In another embodiment, the second layer is of a Ni-X-Y alloy. In a particular embodiment, X and Y are selected from W, Co, Cu, Fe, and P, provided that X and Y are different. In another particular embodiment, X is a metal selected from W, Co, and Cu, and Y is selected from W, Co, and P, provided that X and Y are different.

In a more particular embodiment, the Ni-X alloy consists of from 50% to 99% Ni and from 1% to 50% of X. In another particular embodiment, the Ni-X alloy consists of from 50% to 95% Ni and from 5% to 50% X. In another embodiment, the Ni-X alloy consists of from 70% to 95% Ni and from 5% to 30% X, particularly, from 80% to 90% Ni and from 10% to 20% X.

In another particular embodiment, the Ni-X-Y alloy consist of from 50% to 99% Ni and from 1 to 50% of X + Y. In another particular embodiment, the Ni-X alloy consists of from 50% to 95% Ni and from 5% to 50% X + Y. In another embodiment, the Ni-X alloy consists of from 70% to 95% Ni and from 5% to 30% X + Y, particularly, from 80% to 90% Ni and from 10% to 20% X + Y.

In a more particular embodiment, optionally in combination with one or more features of the embodiments defined above, the Ni-based porous electrode for water electrolysis consists of or consists essentially of the macroporous substrate as defined above, the first metallic coating (i.e. the first layer of a metal or of a metal alloy) covering the macroporous substrate as defined above, and the Ni, Ni-X alloy, or Ni-X-Y alloy coating covering the metallic coating as defined above.

The expression "consisting essentially of" will be understood to include those elements specifically recited and those additional elements that do not materially affect the basic and novel characteristics of the claimed technology.

### Preparation of the Ni-based porous electrode

Since the 3D substrate providing macroscopic porosity is a non-metallic substrate, it requires a pre-treatment before being coated with the catalytically active Ni-X or Ni-X-Y alloy layer. Hence, the process for the manufacture of the Ni-based electrode requires at least, or consists of, two phases: a Phase 1 to cover the macroporous substrate with a low-resistant conductive surface, and a Phase 2 to grow a mesoporous Ni-X or Ni-X-Y alloy catalyst layer there on. The aim of the low-resistant conductive layer is ensuring good adhesion between the non-metallic macroporous substrate (template) and the Ni-X alloy catalyst layer.

The specific characteristics of each phase are summarized in the table below:

| | **Phase 1** | **Phase 2** |
|---|---|---|
| **Method** | Electroless | Micelle-assisted Electrodeposition |
| **Coating thickness** | 100 nm to 20 µm | 300 nm - 2 µm |
| **Porosity level** | Macroscopic porosity | Mesoporosity |
| **Composition** | Ni, Co, Cu, Ag, Sn, or Au alloyed with B or P | Ni, or Binary Ni-X alloy compositions, where weight percentage of Ni is at least 50%, and where X are selected |
| | | from W, Mo, Mn, Co, Sn, Cu or Fe. |
| | | or |
| | | Ternary Ni-X-Y alloy compositions where Ni is at least 50% and X is selected from W, Mo, Mn, Co, Cu, and Fe, and Y are selected from W, Mo, Mn, Co, Cu, Fe, P, B, S, and Se. |

Therefore, as mentioned above, a second aspect of the present disclosure relates to a process for the manufacturing of a Ni-based porous electrode as defined above, the process comprising the following steps: (i) provision of a macroporous substrate; (ii) deposition by electroless plating of a metal or metal alloy on a macroporous substrate in order to form a first layer of the metal or metal alloy having the thickness and composition as defined above; and (iii) micelle-assisted electrodeposition of a Ni, Ni-X alloy, a Ni-X-Y alloy as defined above on the first layer of the metal or metal alloy in order to obtain a second layer of a Ni, Ni-X alloy, or Ni-X-Y alloy covering the first layer; wherein step (iii) is carried out without previously removing the macroporous substrate.

Step (ii) of growing a first layer of metal or metal alloy on the surface of the macroporous substrate (i.e. in direct contact with the surface of the macroporous substrate and covering the entire surface of the macroporous substrate), is intended to enable the subsequent electrodeposition of the second layer of the Ni, Ni-X alloy, the Ni-X-Y alloy.

The deposition of the first layer of metal or metal alloy can be carried out as disclosed in US 2022/0213600A1. This process allows to obtain a homogeneous metal or metal alloy coating having a uniform thickness and composition. As an example, this first layer can be prepared as disclosed in phase 1 of Example 1 below.

Step (iii) of micelle-assisted electrodeposition of Ni, a Ni-X alloy, or a Ni-X-Y alloy on the first layer of the metal or metal alloy allows providing a second mesoporous catalytically active layer covering the first layer of metal or metal alloy.

Micelle-assisted electrodeposition involves the use of micelles formed by an amphiphilic block copolymer added to the plating electrolyte at a concentration beyond the critical micelle concentration and acting as surfactant or, more specifically, as a structure-directing agent. The CMC (critical micelle concentration) is the concentration of a surfactant in a bulk phase, above which aggregates of surfactant molecules, so-called micelles, start to form.

Examples of amphiphilic block copolymers include, without being limited to, block copolymers of poly(oxyethylene) and poly(oxypropylene), poly(styrene)-block-poly(methyl methacrylate) copolymers (PS-b-PMMA copolymers), and poly(acrylic acid)-block-poly(2-acrylamido-2-methyl-propane sulfonate) copolymers (PAA-b-PAMPS copolymers), Triton X-100, Brij 58 and others.

In an embodiment of the process of the present disclosure, the amphiphilic block copolymer is a block copolymer of poly(oxyethylene) and poly(oxypropylene).

Examples of block copolymers of poly(oxyethylene) and poly(oxypropylene) include, without being limited to, tri-block copolymers of poly(propylene oxide) (PEO-PPO-PEO), known as poloxamers, such as Pluronic^{®} P123, Pluronic^{®} P103, Pluronic^{®} P85, and Pluronic^{®} L64.

The electrodeposition of the second layer of Ni, a Ni-X alloy, or a Ni-X-Y alloy as defined above can be carried out from an aqueous solution containing a single nickel salt or a mixture of nickel salts as Ni precursor and X and/or Y precursors in form of a metal salt or a mixture of metal salts, and/or organic components (such as additives), along with the other electrolytic bath components which can be used whenever needed to ensure an effective electrodeposition process. Any person skilled in the art will know which time should be applied in order to obtain the desired thickness depending on whether Ni or one of the Ni alloys above are used. This step can be carried out either potentiostatically or galvanostatically. The concentration of the electrolyte components, as well as the process conditions (e.g. temperature, pH, stirring, etc.) can be varied to precisely tune the stoichiometry of the resulting Ni, Ni-X, or Ni-X-Y alloy. Deposition time can be varied to modulate the thickness of deposited catalysts, always ensuring that a sufficiently long process is performed to form a continuous Ni, Ni-X, or Ni-X-Y layer. As an example, this second layer can be prepared as disclosed in phase 2 of Example 1 below.

The key advantage of micelle-assisted electrodeposition is that it allows for precise control over the size and distribution of nanopores in the deposited material. The size of the pores can be adjusted by selecting the appropriate surfactant. Additionally, this method allows to obtain a homogeneous Ni, Ni-X alloy, or Ni-X-Y alloy coating having a uniform thickness and composition.

Advantageously, the process of the present disclosure allows obtaining a Ni-based porous electrode as defined above wherein the first metallic coating (b) is present on the entire surface of the macroporous substrate (a) and the Ni, Ni-X alloy, or Ni-X-Y alloy coating (c) is present on the entire surface of the metallic coating (b).

The Ni-based porous electrode obtainable by the process disclosed above also form part of the invention.

In the present disclosure, it is noted that when discussing the Ni-based porous electrode, and the process for preparing it, each one of the embodiments or features defined for the Ni-based porous electrode can be considered to apply to the process, whenever applicable, whether they are explicitly discussed in the context of that other aspect or not.

As mentioned above, the Ni-based porous electrode of the present disclosure can be used to catalyze a HER both in acidic and alkaline aqueous solution, particularly in acidic aqueous solution. Thus, the invention also relates to a water electrolyzer comprising the Ni-based porous electrode as defined herein.

Throughout the description and claims the word "comprise" and variations of the word, are not intended to exclude other technical features, additives, components, or steps. Furthermore, the word "comprise" encompasses the case of "consisting of".

The following examples and drawings are provided by way of illustration, and they are not intended to be limiting of the present invention. Furthermore, the present invention covers all possible combinations of particular and preferred embodiments described herein.

### Examples

### Characterization techniques

The morphology of the samples (electrocatalysts) was examined by field-emission scanning electron microscopy (FESEM) (Carl Zeiss Ultra Plus). The composition of the electrodeposited coatings was determined using an energy dispersive X-ray detector coupled to the electron microscope using the flat replicas produced under the same conditions as the porous/hierarchically porous counterparts. For single-phase Ni-X alloys, the composition was also verified by X-ray diffraction (XRD).

Ni-X materials were also deposited onto a flat surface for sake of comparison, and in order to examine their composition and crystallographic structure.

### Example 1.- Preparation of hierarchically porous Ni-Cu electrocatalysts

A Ni-Cu hierarchically porous electrocatalyst was prepared according to the following process consisting on 2 phases:

### - Phase 1 - electroless metallization of the polyurethane with Ni-P

A polyurethane foam having a thickness of 650 µm and a pore size of 100-350 µm was subjected to a series of pre-treatment steps including degreasing, sensitization, activation and, finally, Ni-P deposition.

First, degreasing of the polyurethane foam was performed using a commercial electrolyte "Uniclean Bio" (Atotech) operating at 45 °C for 10 min. Then, to make the surface active towards the electroless metal plating process, a metallic seeding step (sensitization step) was carried out by immersing the degreased polyurethane foam into the commercially available Pd/Sn activation solution (Adhemax Activator SF; Atotech Deutchland GMbH) operating at 40 °C for 15 min. The resulting polyurethane foam was subjected to an activation step by immersion in an acid-based solution (Adhemax accelerator, Atotech Deutchland GMbH) operating at 42 °C for 2 min. Finally, electroless plating (Ni-P deposition) was performed using a low phosphorus electroless nickel solution bath operating at pH 5 and 75 °C for 10 min and a constant stirring at 150 rpm. An electroless solution comprising 14.5 g/L hexahydrated nickel sulfate, 18 g/L of nickel sulfamate 50% w/w solution, 20 g/L sodium hypophosphite as reducing agent and 13 g/L glycine as main complexing agent and having a pH of 6.5 was used. The deposition time was adjusted taking into account the deposition rate of 12 µm/h. A layer of 2 µm of electroless low phosphorus Ni coating was deposited.

After each step the sample was abundantly rinsed with water.

### - Phase 2 - micelle-assisted electrodeposition of Ni-Cu catalyst onto the surface of the template

The polyurethane foam metallized with a low phosphorus Ni coating obtained in phase 1 was subjected to phase 2, where a nanoporous Ni-Cu layer was electrodeposited onto the surface of the metallized foam. The electrodeposition was carried out from a bath with the following composition: 400 mM Ni(SO₃NH₂)₂, 20 mM CuSO₄·5H₂O, 150 mM glycine, 200 mM H₃BO₃, 10 g/L Pluronic^{®} P-123, and 10 mM saccharine. The pH of the bath was 2.7. The electrodeposition was performed in a two-electrode cell where the metallized foam acts as a cathode and a Ni plate acts as anode. A nanoporous Ni-Cu layer with 500 nm thickness was grown in potentiostatic mode by applying 5 V between anode and cathode for 10 minutes under stagnant conditions and at room temperature. After the electrodeposition stage, the electrode was rinsed with water and immersed in ethanol for 10 minutes to dissolve the polymeric micelles that could have remained attached to the surface of the electrocatalyst, followed with a thorough rinsing with ethanol and water.

By means of FE-SEM it was observed that the mesoporous Ni-Cu can be successfully deposited on the macroporous PU substrate, thus rendering a Ni-Cu electrode with hierarchical (or dual) porosity.

### Example 2 - Preparation of hierarchically porous Ni-W electrocatalysts

A Ni-W hierarchically porous electrocatalyst was prepared through a two-phase process consisting of the following steps

### - Phase 1 - electroless metallization of the carbon cloth with Ni-P

A carbon cloth having a thickness of 450 µm and a fibrous structure with the distance between fibres between 1 - 30 µm was subjected to a series of pre-treatment steps including degreasing, sensitization, activation and, finally, Ni-P deposition.

First, degreasing of the carbon cloth was performed using a commercial electrolyte "Uniclean Bio" (Atotech) operating at 45 °C for 10 min. Then, to make the surface active towards the electroless metal plating process, a metallic seeding step (sensitization step) was carried out by immersing the degreased carbon cloth into the commercially available Pd/Sn activation solution (Adhemax Activator SF; Atotech Deutchland GMbH) operating at 40 °C for 15 min. The resulting carbon cloth was subjected to an activation step by immersion in an acid-based solution (Adhemax accelerator, Atotech Deutchland GMbH) operating at 42 °C for 2 min. Finally, electroless plating (Ni-P deposition) was performed using a low phosphorus electroless nickel solution bath operating at pH 5 and 75 °C for 10 min and a constant stirring at 150 rpm. An electroless solution comprising 14.5 g/L hexahydrated nickel sulfate, 18 g/L of nickel sulfamate 50% w/w solution, 20 g/L sodium hypophosphite as reducing agent and 13 g/L glycine as main complexing agent and having a pH of 6.5 was used. The deposition time was adjusted taking into account the deposition rate of 12 µm/h. A layer of 1 µm of electroless low phosphorus Ni coating was deposited.

After each step the sample was abundantly rinsed with water.

### - Phase 2 - micelle-assisted electrodeposition of Ni-W catalyst onto the surface of the carbon cloth template

The carbon cloth metallized with a low phosphorus Ni coating obtained in phase 1 was subjected to phase 2, where a nanoporous Ni-W layer was electrodeposited onto the surface of the metallized carbon cloth. The electrodeposition was carried out from a bath with the following composition: 0.11 M NiSO₄·7H₂O, 0.05 M Na₂WO₄, 0.5 M NaC₆H₁₁O₇ (sodium gluconate), 0.65 M H₃BO₃, and 3.2 mg/mL Pluronic^{®} P-123. The pH of the bath was 5.0. The electrodeposition was performed in a two-electrode cell where the metallized carbon cloth acted as a cathode and a Ni plate acted as anode. A nanoporous Ni-W layer with 500 nm thickness was grown in potentiostatic mode by applying 2.6V between anode and cathode for 20 minutes under 100 rpm and at room temperature. After the electrodeposition stage, the electrode was rinsed with water and immersed in ethanol for 10 minutes to dissolve the polymeric micelles that could have remained attached to the surface of the electrocatalyst, followed with a thorough rinsing with ethanol and water.

### Comparative Examples 1 to 4

For the sake of comparison, the following metallic coatings were formed on flat and/or foam substrates:
- Comparative examples 1: a Ni-P layer was deposited onto a polyurethane foam by electroless plating (macroporous, only Phase 1).
- Comparative examples 2: a Ni-Cu composition was electrodeposited onto a flat Cu surface without addition of Pluronic P-123 (Ni-Cu flat (dense))
- Comparative examples 3: a Ni-Cu composition was electrodeposited onto a flat Cu surface with the addition of Pluronic P-123 (Ni-Cu mesoporous, only Phase 2).
- Comparative Example 4: a Ni-Cu layer was deposited onto a metallized polyurethane foam (i.e. after performing the Phase 1) using an electrolyte without addition of Pluronic P-123.
- Reference Example: Pt/ VULCAN^{®} XC72R Carbon Black particles with 30 wt.% of Pt dispersed on the surface of carbon paper.

### Electrochemical measurements

The electrochemical measurements were performed at laboratory scale using the samples of Example 1 and Comparative Examples 1 to 3 with 2-5 cm² (lateral area).

A double-compartment cell, where the anode and cathode spaces were separated by a proton exchange membrane (Nafion), was used to assemble the three-electrode configuration. A Pt mesh anode with high surface area was used as an anode. A hydrogen HydroFlex electrode from Gaskatel was used as a reference electrode and was placed next to the working electrode (electrocatalyst, cathode). To create an acidic medium, a 0.5 M H₂SO₄ solution was used. To create an alkaline medium, a 1 M KOH solution was employed. The potentiodynamic curves were recorded starting from OCP to - 0.8 V vs RHE at 10 mV/s. The curves were corrected for the Ohmic drop. The stability of the cathodes was tested by applying a constant current density, i.e., -10 mA/cm² for a maximum of 7 days (168 h). The corresponding current was calculated assuming the lateral dimensions of the electrode. The polarization experiments were combined with electrochemical impedance spectroscopy (EIS) that has been performed every 24 h under applied polarization conditions, i.e., without interrupting the HER. The EIS spectra were measured in the range from 10 kHz to 0.1 Hz, with an amplitude of 0.5 mV. All the electrochemical tests were performed at room temperature (i.e., from 20 to 25 °C).

To provide a reference, a traditional Pt/C catalyst was prepared and tested under the same conditions. The catalyst consisted on Pt/ VULCAN^{®} XC72R Carbon Black particles with 30 wt.% of Pt dispersed on the surface of carbon paper.

Fig. 1 shows the linear sweep voltammetry (LSV) curves recorded on the Ni-Cu samples with the same composition and various porosity levels. The tests were performed in 0.5 M H₂SO₄. The polarization curves corresponding to a Ni-P sample (macroporosity, only Phase 1) and to a traditional Pt/C catalyst obtained under similar testing conditions are also presented. As it can be seen, introducing the mesoporosity to the flat films results in an increase in catalytic activity, as the curve appears slightly shifted towards more positive potentials. Furthermore, by producing the mesoporous coating on top of a metallized 3D foam, the curve is further shifted indicating an enhanced catalytic activity of the electrode towards the hydrogen production in acidic media. As Ni-Cu is not commonly considered as a promising catalyst for HER, the obtained results show that by fabricating a hierarchically porous structure, the onset potential can be shifted by almost 300 mV in acidic medium, thus approaching the activity of traditional Pt/C nanoparticle-based catalysts.

Remarkably, when the measurements are performed in alkaline medium, the tendency is maintained, i.e., hierarchically porous Ni-Cu deposits demonstrate a better catalytic activity as compared to their dense and flat mesoporous counterparts (Fig.2).

It is worth mentioning that it is not foreseen to achieve the same level of catalytic activity as Pt-based catalyst. There will always be a trade-off between cost-effectiveness and efficiency. Nevertheless, the electrocatalyst of the present disclosure provides a way to significantly enhance the catalytic activity of a non-noble material, which is not commonly considered as a catalyst for acidic media, thus paving the way towards the equilibrium price vs. efficiency.

### Chronopotentiometry results

Ni-Cu films for hydrogen generation are commonly used in alkaline media, since stability in acidic media is doubtful. However, the hierarchically porous Ni-Cu of Example 1 showed a sufficient stability in acidic media under a constant current application. The stability of the hierarchically porous electrode in acidic media showed a negligible variation in potential over 7-days test. The observed variation in potential can be considered negligible for such a long operation time. At the same time, the use of two-compartment cell precludes the contamination of the working electrode with any Pt particles that could be detached from the anode during the test.

### Citation List

1. Gojgić, J.D. *et al.* "Hydrogen evolution at Ni foam electrodes and Ni-Sn coated Ni foam electrodes", *Applied Catalysis A: General,* 2023, Vol. 663, 119312.
2. Wu, Y. et al. "Potentiostatic electrodeposited of Ni-Fe-Sn on Ni foam served as an excellent electrocatalyst for hydrogen evolution reaction", International Journal of Hydrogen Energy, 2021, Vol. 46, Issue 53, pp. 26930-26939.
3. US 2022/0213600
4. WO2017186917
5. Putri Lutfi K et al., "Engineering nickel phosphides for electrocatalytic hydrogen evolution: A doping perspective", Chemical Engineering Journal, 2023, vol. 461
6. Záchenská Jana et al., "Nickel-based nanocoatings on 3D Ni foam for zero-gap alkaline water electrolysis", Journal of Applied Electrochemistry, 2020, vol. 50
7. Huo Siyue et al., "Synthesis of functional Ni2P/CC catalyst and the robust performances in hydrogen evolution reaction and nitrate reduction", International Journal of Hydrogen Energy, 2019, vol. 45
8. Li Teng et al., "Scale-Up Preparation of Flexible Ni-W-P@Fiber Cloth Electrode for Boosting Overall Water Electrosplitting", ACS Sustainable Chemistry & Engineering, 2023, vol. 11

## Claims

1. A Ni-based porous electrode for water electrolysis, the electrode comprising:
(a) a macroporous substrate having a thickness from 100 to 1500 µm, a porosity equal to or higher than 45% and, optionally, a pore size from 50 µm to 450 µm;
(b) a first layer of a metal or of a metal alloy covering the macroporous substrate, wherein the first layer has a thickness from 100 nm to 20 µm and the metal or the metal alloy is selected from the group consisting of Ni, Co, Cu, Ag, Sn, Au, and an alloy of the metal with B or P; and
(c) a second layer of Ni, a Ni-X alloy or a Ni-X-Y alloy covering the first layer (b), wherein the second layer has a thickness from 300 nm to 2 µm and a pore size from 2 nm to 100 nm; and wherein the Ni-X alloy is a binary alloy comprising at least 50 wt.% Ni, and X is a metal selected from W, Mo, Mn, Co, Cu, and Fe; and the Ni-X-Y is a ternary alloy comprising at least 50 wt.% Ni, and X and Y are selected from W, Mo, Mn, Co, Cu, Fe, P, B, S, and Se, provided that X and Y are different;
wherein the Ni-based porous electrode is free from Pt-group metals and rare-earths.

2. The Ni-based porous electrode of claim 1, wherein the thickness of the macroporous substrate is from 100 µm to 1000 µm.

3. The Ni-based porous electrode of claims 1 or 2, wherein the porosity of the macroporous substrate is from 50% to 99%.

4. The Ni-based porous electrode of any one of claims 1 to 3, wherein the macroporous substrate is a carbon cloth or a polymer foam.

5. The Ni-based porous electrode of any one of claims 1 to 4, wherein the macroporous substrate is a polymeric foam having a pore size from 50 µm to 450 µm.

6. The Ni-based porous electrode of any one of claims 1 to 5, wherein the macroporous substrate is a polyurethane foam.

7. The Ni-based porous electrode of any one of claims 1 to 6, wherein the metal or the metal alloy of the first layer (b) is selected from the group consisting of Co, Cu, and a Ni-P alloy.

8. The Ni-based porous electrode of any one of claims 1 to 7, wherein the metal or the metal alloy of the first layer (b) is a Ni-P alloy.

9. The Ni-based porous electrode of any one of claims 1 to 8, wherein the Ni, Ni-X alloy, or Ni-X-Y alloy coating covering the first layer of metal or metal alloy has a thickness from 300 nm to 1 µm.

10. The Ni-based porous electrode of any one of claims 1 to 9, wherein the Ni, Ni-X alloy, or Ni-X-Y alloy coating covering the metallic coating has a pore size from 5 nm to lower than 100 nm.

11. The Ni-based porous electrode of any one of claims 1 to 10, wherein the second layer is a Ni-X alloy wherein X is selected from W, Co, Cu, and Fe; or wherein the second layer is a Ni-X-Y alloy, wherein X and Y are selected from W, Co, Cu, Fe and P, provided that X and Y are different.

12. The Ni-based porous electrode of any one of claims 1 to 11, wherein the Ni-X alloy consists of from 50% to 99% Ni and from 1% to 50% of X; and the Ni-X-Y alloy consist of from 50% to 99% Ni and from 1 to 50% of X + Y.

13. A process for the manufacturing of a Ni-based porous electrode as defined in claim 1, wherein the Ni-based porous electrode is free from Pt-group metals and rare-earths, the process comprising the following steps:
(i) provision of a macroporous substrate having a thickness from 100 to 1500 µm, a porosity equal to or higher than 45% and, optionally, a pore size from 50 µm to 450 µm;
(ii) deposition by electroless plating of a metal or metal alloy on a macroporous substrate in order to form a first layer of the metal or metal alloy having a thickness from 100 nm to 20 µm, wherein the metal or the metal alloy is selected from the group consisting of Ni, Co, Cu, Ag, Sn, Au, and an alloy of the metal with B or P; and
(iii) micelle-assisted electrodeposition of Ni, a Ni-X alloy, or a Ni-X-Y alloy on the first layer of metal or metal alloy in order to obtain a second layer of Ni, a Ni-X alloy, or Ni-X-Y alloy covering the first layer; wherein the Ni, Ni-X alloy, or Ni-X-Y alloy layer has a thickness from 300 nm to 2 µm and a pore size from 2 nm to 100 nm; wherein the Ni-X alloy is a binary alloy comprising at least 50 wt.% Ni, and X is a metal selected from W, Mo, Mn, Co, Cu, and Fe; and the Ni-X-Y is a ternary alloy comprising at least 50 wt.% Ni, and X and Y are selected from W, Mo, Mn, Co, Cu, Fe, P, B, S, and Se, provided that X and Y are different;
wherein step (iii) is carried out without previously removing the macroporous substrate.

14. Use of the Ni-based porous electrode as defined in any one of claims 1 to 12 to catalyze a hydrogen evolution reaction both in acidic and alkaline aqueous solution, particularly in acidic aqueous solution.

15. A water electrolyzer comprising the Ni-based porous electrode as defined in any one of claims 1 to 12.

## Patentansprüche

1. Eine poröse Elektrode auf Ni-Basis für die Wasserelektrolyse, wobei die Elektrode Folgendes umfasst:
(a) ein makroporöses Substrat mit einer Dicke von 100 bis 1500 µm, einer Porosität von 45 % oder mehr und wahlweise einer Porengröße von 50 µm bis 450 µm;
(b) eine erste Schicht aus einem Metall oder einer Metalllegierung, die das makroporöse Substrat bedeckt, wobei die erste Schicht eine Dicke von 100 nm bis 20 µm aufweist und das Metall oder die Metalllegierung ausgewählt ist aus der Gruppe bestehend aus Ni, Co, Cu, Ag, Sn, Au und einer Legierung des Metalls mit B oder P; und
(c) eine zweite Schicht aus Ni, einer Ni-X-Legierung oder einer Ni-X-Y-Legierung, die die erste Schicht (b) bedeckt, wobei die zweite Schicht eine Dicke von 300 nm bis 2 µm und eine Porengröße von 2 nm bis 100 nm aufweist; und wobei die Ni-X-Legierung eine binäre Legierung ist, die mindestens 50 Gew.- % Ni umfasst und X ein Metall ist, das aus W, Mo, Mn, Co, Cu und Fe ausgewählt ist; und die Ni-X-Y eine ternäre Legierung ist, die mindestens 50 Gew.-% Ni umfasst, und X und Y ausgewählt aus W, Mo, Mn, Co, Cu, Fe, P, B, S und Se sind, unter der Voraussetzung, dass X und Y unterschiedlich sind;
wobei die poröse Elektrode auf Ni-Basis frei von Metallen der Pt-Gruppe und Seltenen Erden ist.

2. Die poröse Elektrode auf Ni-Basis von Anspruch 1, wobei die Dicke des makroporösen Substrats von 100 µm bis 1000 µm beträgt.

3. Die poröse Elektrode auf Ni-Basis von den Ansprüchen 1 oder 2, wobei die Porosität des makroporösen Substrats von 50 % bis 99 % beträgt.

4. Die poröse Elektrode auf Ni-Basis von einem der Ansprüche 1 bis 3, wobei das makroporöse Substrat ein Kohlenstoffgewebe oder ein Polymerschaum ist.

5. Die poröse Elektrode auf Ni-Basis von einem der Ansprüche 1 bis 4, wobei das makroporöse Substrat ein Polymerschaum mit einer Porengröße von 50 µm bis 450 µm ist.

6. Die poröse Elektrode auf Ni-Basis von einem der Ansprüche 1 bis 5, wobei das makroporöse Substrat ein Polyurethanschaum ist.

7. Die poröse Elektrode auf Ni-Basis von einem der Ansprüche 1 bis 6, wobei das Metall oder die Metalllegierung der ersten Schicht (b) ausgewählt ist aus der Gruppe bestehend aus Co, Cu und einer Ni-P-Legierung.

8. Die poröse Elektrode auf Ni-Basis von einem der Ansprüche 1 bis 7, wobei das Metall oder die Metalllegierung der ersten Schicht (b) eine Ni-P-Legierung ist.

9. Die poröse Elektrode auf Ni-Basis von einem der Ansprüche 1 bis 8, wobei die Beschichtung aus Ni, einer Ni-X-Legierung oder einer Ni-X-Y-Legierung, die die erste Schicht aus Metall bzw. Metalllegierung bedeckt, eine Dicke von 300 nm bis 1 µm aufweist.

10. Die poröse Elektrode auf Ni-Basis von einem der Ansprüche 1 bis 9, wobei die Beschichtung aus Ni, einer Ni-X-Legierung oder einer Ni-X-Y-Legierung, die die metallische Beschichtung bedeckt, eine Porengröße von 5 nm bis weniger als 100 nm aufweist.

11. Die poröse Elektrode auf Ni-Basis von einem der Ansprüche 1 bis 10, wobei die zweite Schicht eine Ni-X-Legierung ist, wobei X aus W, Co, Cu und Fe ausgewählt ist; oder wobei die zweite Schicht eine Ni-X-Y-Legierung ist, wobei X und Y aus W, Co, Cu, Fe und P ausgewählt sind, unter der Voraussetzung, dass X und Y unterschiedlich sind.

12. Die poröse Elektrode auf Ni-Basis von einem der Ansprüche 1 bis 11, wobei die Ni-X-Legierung aus von 50 % bis 99 % Ni und von 1 % bis 50 % von X besteht; und die Ni-X-Y-Legierung aus von 50 % bis 99 % Ni und von 1 bis 50 % von X + Y besteht.

13. Ein Verfahren zur Herstellung einer porösen Elektrode auf Ni-Basis wie in Anspruch 1 besprochen, wobei die poröse Elektrode auf Ni-Basis frei von Metallen der Pt-Gruppe und Seltenen Erden ist, wobei das Verfahren die folgenden Schritte umfasst:
(i) Bereitstellen eines makroporösen Substrats mit einer Dicke von 100 bis 1500 µm, einer Porosität von 45 % oder mehr und gegebenenfalls einer Porengröße von 50 µm bis 450 µm;
(ii) Abscheiden eines Metalls oder einer Metalllegierung durch stromloses Plattieren auf einem makroporösen Substrat, um eine erste Schicht des Metalls oder der Metalllegierung mit einer Dicke von 100 nm bis 20 µm zu bilden, wobei das Metall oder die Metalllegierung ausgewählt ist aus der Gruppe bestehend aus Ni, Co, Cu, Ag, Sn, Au und einer Legierung des Metalls mit B oder P; und
(iii) mizellenunterstütztes elektrolytisches Abscheiden von Ni, einer Ni-X-Legierung oder einer Ni-X-Y-Legierung auf der ersten Schicht aus Metall bzw. Metalllegierung, um eine zweite Schicht aus Ni, einer Ni-X-Legierung oder einer Ni-X-Y-Legierung zu erhalten, die die erste Schicht bedeckt; wobei die Schicht aus Ni, Ni-X-Legierung oder Ni-X-Y-Legierung eine Dicke von 300 nm bis 2 µm und eine Porengröße von 2 nm bis 100 nm aufweist; wobei die Ni-X-Legierung eine binäre Legierung ist, die mindestens 50 Gew.- % Ni umfasst und X ein Metall ist, das aus W, Mo, Mn, Co, Cu und Fe ausgewählt ist; und die Ni-X-Y eine ternäre Legierung ist, die mindestens 50 Gew.- % Ni umfasst, und X und Y ausgewählt sind aus W, Mo, Mn, Co, Cu, Fe, P, B, S und Se, unter der Voraussetzung, dass X und Y unterschiedlich sind;
wobei der Schritt (iii) ohne vorheriges Entfernen des makroporösen Substrats durchgeführt wird.

14. Verwendung der porösen Elektrode auf Ni-Basis wie in einem der Ansprüche 1 bis 12 definiert, um eine Wasserstoffentwicklungsreaktion sowohl in saurer als auch in alkalischer wässriger Lösung, insbesondere in saurer wässriger Lösung, zu katalysieren.

15. Ein Wasserelektrolyseur, der die poröse Elektrode auf Ni-Basis wie in einem der Ansprüche 1 bis 12 definiert umfasst.

## Revendications

1. Une électrode poreuse à base de Ni pour l'électrolyse de l'eau, l'électrode comprenant :
(a) un substrat macroporeux ayant une épaisseur allant de 100 à 1500 µm, une porosité égale ou supérieure à 45 % et, éventuellement, une taille de pore allant de 50 µm à 450 µm ;
(b) une première couche d'un métal ou d'un alliage métallique recouvrant le substrat macroporeux, dans lequel la première couche a une épaisseur allant de 100 nm à 20 µm et le métal ou l'alliage métallique est choisi dans le groupe constitué par le Ni, le Co, le Cu, l'Ag, le Sn, l'Au et un alliage du métal avec du B ou du P ; et
(c) une seconde couche de Ni, un alliage de Ni-X ou un alliage de Ni-X-Y recouvrant la première couche (b), dans lequel la seconde couche a une épaisseur allant de 300 nm à 2 µm et une taille de pore allant de 2 nm à 100 nm ; et dans lequel l'alliage de Ni-X est un alliage binaire comprenant au moins 50 % en poids de Ni, et X est un métal choisi parmi le W, le Mo, le Mn, le Co, le Cu et le Fe ; et le Ni-X-Y est un alliage ternaire comprenant au moins 50 % en poids de Ni, et X et Y sont choisis parmi le W, le Mo, le Mn, le Co, le Cu, le Fe, le P, le B, le S et le Se, à condition que X et Y soient différents ;
dans lequel l'électrode poreuse à base de Ni est exempte de métaux du groupe du Pt et de terres rares.

2. L'électrode poreuse à base de Ni de la revendication 1, dans laquelle l'épaisseur du substrat macroporeux est de 100 µm à 1000 µm.

3. L'électrode poreuse à base de Ni des revendications 1 ou 2, dans laquelle la porosité du substrat macroporeux est de 50 % à 99 %.

4. L'électrode poreuse à base de Ni de l'une quelconque des revendications 1 à 3, dans laquelle le substrat macroporeux est un tissu de carbone ou une mousse de polymère.

5. L'électrode poreuse à base de Ni de l'une quelconque des revendications 1 à 4, dans laquelle le substrat macroporeux est une mousse polymère ayant une taille de pore allant de 50 µm à 450 µm.

6. L'électrode poreuse à base de Ni de l'une quelconque des revendications 1 à 5, dans laquelle le substrat macroporeux est une mousse de polyuréthane.

7. L'électrode poreuse à base de Ni selon l'une quelconque des revendications 1 à 6, dans laquelle le métal ou l'alliage métallique de la première couche (b) est choisi dans le groupe constitué par le Co, le Cu et un alliage de Ni-P.

8. L'électrode poreuse à base de Ni de l'une quelconque des revendications 1 à 7, dans laquelle le métal ou l'alliage métallique de la première couche (b) est un alliage de Ni-P.

9. L'électrode poreuse à base de Ni de l'une quelconque des revendications 1 à 8, dans laquelle le revêtement en Ni, en alliage de Ni-X ou en alliage de Ni-X-Y recouvrant la première couche de métal ou d'alliage métallique a une épaisseur allant de 300 nm à 1 µm.

10. L'électrode poreuse à base de Ni de l'une quelconque des revendications 1 à 9, dans laquelle le revêtement en Ni, en alliage de Ni-X ou en alliage de Ni-X-Y recouvrant le revêtement métallique a une taille de pore allant de 5 nm à moins de 100 nm.

11. L'électrode poreuse à base de Ni de l'une quelconque des revendications 1 à 10, dans laquelle la seconde couche est un alliage de Ni-X dans lequel X est choisi parmi le W, le Co, le Cu et le Fe ; ou dans laquelle la seconde couche est un alliage de Ni-X-Y, dans lequel X et Y sont choisis parmi le W, le Co, le Cu, le Fe et le P, à condition que X et Y soient différents.

12. L'électrode poreuse à base de Ni de l'une quelconque des revendications 1 à 11, dans laquelle l'alliage de Ni-X est constitué de 50 % à 99 % de Ni et de 1 % à 50 % de X ; et l'alliage de Ni-X-Y est constitué de 50 % à 99 % de Ni et de 1 à 50 % de X + Y.

13. Un procédé de fabrication d'une électrode poreuse à base de Ni telle que définie dans la revendication 1, dans lequel l'électrode poreuse à base de Ni est exempte de métaux du groupe du Pt et de terres rares, le procédé comprenant les étapes suivantes :
(i) fourniture d'un substrat macroporeux ayant une épaisseur allant de 100 à 1500 µm, une porosité égale ou supérieure à 45 % et, éventuellement, une taille de pore allant de 50 µm à 450 µm ;
(ii) dépôt moyennant déposition sans courant d'un métal ou d'un alliage métallique sur un substrat macroporeux afin de former une première couche du métal ou de l'alliage métallique ayant une épaisseur allant de 100 nm à 20 µm, dans lequel le métal ou l'alliage métallique est choisi dans le groupe constitué par le Ni, le Co, le Cu, l'Ag, le Sn, l'Au et un alliage du métal avec le B ou le P ; et
(iii) électrodéposition assistée par micelles de Ni, d'un alliage de Ni-X ou d'un alliage de Ni-X-Y sur la première couche de métal ou d'alliage métallique afin d'obtenir une seconde couche de Ni, d'un alliage de Ni-X ou d'un alliage de Ni-X-Y recouvrant la première couche ; dans lequel la couche de Ni, d'alliage de Ni-X ou d'alliage de Ni-X-Y a une épaisseur allant de 300 nm à 2 µm et une taille de pore allant de 2 nm à 100 nm ; dans lequel l'alliage de Ni-X est un alliage binaire comprenant au moins 50 % en poids de Ni, et X est un métal choisi parmi le W, le Mo, le Mn, le Co, le Cu et le Fe ; et le Ni-X-Y est un alliage ternaire comprenant au moins 50 % en poids de Ni, et X et Y sont choisis parmi le W, le Mo, le Mn, le Co, le Cu, le Fe, le P, le B, le S et le Se, à condition que X et Y soient différents ;
dans lequel l'étape (iii) est mise en œuvre sans retrait préalable du substrat macroporeux.

14. Utilisation de l'électrode poreuse à base de Ni telle que définie dans l'une quelconque des revendications 1 à 12 pour catalyser une réaction de dégagement d'hydrogène à la fois dans une solution aqueuse acide et alcaline, en particulier dans une solution aqueuse acide.

15. Un électrolyseur à eau comprenant l'électrode poreuse à base de Ni telle que définie dans l'une quelconque des revendications 1 à 12.
